# EUROPÄISCHE PATENTSCHRIFT

(11) **EP 1 694 740 B1**
(45) Veröffentlichungstag und Bekanntmachung des Hinweises auf die Patenterteilung: **05.09.2007**
(21) Anmeldenummer: 04803612.3
(22) Anmeldetag: 08.12.2004
(51) Int. Cl.: C08G 65/00, C08G 65/26

(54) **POLYETHYLENGLYKOL UND DESSEN HERSTELLUNG**
POLYETHYLENE GLYCOL AND PRODUCTION OF THE SAME
GLYCOL DE POLYETHYLENE ET SA REALISATION

(30) Priorität: 12.12.2003 DE 10358213
(43) Veröffentlichungstag der Anmeldung: 30.08.2006
(73) Patentinhaber: Clariant Produkte (Deutschland) GmbH, 65929 Frankfurt am Main (DE)
(72) Erfinder: HENNING, Torsten, 19057 Schwerin (DE); WAGNER, Rainer, 84508 Burgkirchen (DE)
(74) Vertreter: Paczkowski, Marcus
(86) Internationale Anmeldenummer: PCT/EP2004/013934
(87) Internationale Veröffentlichungsnummer: WO 2005/056635

(56) Entgegenhaltungen:
- EP-A- 0 539 167
- EP-A- 0 850 972
- EP-A- 1 065 193
- EP-A- 1 245 608

## Beschreibung

Die Erfindung betrifft Polyethylenglykole mit einem niedrigen Aldehydgehalt und ein Verfahren zu dessen Herstellung.

Polyethylenglykole mit der allgemeinen Formel H(OCH₂CH₂)ₙOH mit n gleich 4 bis 900 entsprechend mittleren Molmassen von 180 bis 40000, die allgemein durch Polymerisation von Ethylenoxid an Wasser oder Mono-, Di- oder Triethylenglykol hergestellt werden, werden aufgrund Ihrer interessanten Eigenschaften in einer Vielzahl von Anwendungsgebieten eingesetzt. Bei einer großen Zahl dieser Anwendungen kommt das Polyethylenglykol in oberflächlichen Kontakt mit der Haut von Lebewesen, speziell Menschen, oder wird auch Menschen oder Tieren oral oder parenteral verabreicht.
Solche Anwendungen sind beispielsweise Lösungsmittel für Wirkstoffe, Aromastoffe beziehungsweise Riechstoffe eingesetzt in medizinischen Tropfen, Injektionslösungen, Nahrungsergänzungsmitteln, Tabletten, Salben, Sticks, Suppositorien oder Gelatinekapseln; Weichmacher für Überzüge von Filmtabletten; Bindemittel in Tabletten; Feuchthaltemittel in Zahnpasten; Feuchtigkeitsspender und/oder Konditioniermittel in Duschbädern, Shampoos, Cream rinse Spülungen, Treatment Haarkuren, Seifen, Flüssigseifen, Haarsprays, Haargelen, After Shave Produkten, Gesichtsmasken, Sonnenschutzprodukten, Cremes oder Lotionen; Bestandteil von mehrphasigen Produkten wie Zweiphasenduschbädern, Zweiphasenschaumbädern oder Dreiphasenölbädern; sowie Wirkstoff in Augentropfen, Laxantien oder antiapoptotisch wirkenden Lösungen.

Wichtig für diese Anwendungen ist es, den Gehalt an für den lebenden Organismus schädlichen Nebenprodukten in diesen Polyglykolen so gering wie irgend möglich zu halten. Zu diesen Nebenprodukten zählen insbesondere Aldehyde, besonders Formaldehyd.

Für den Einsatz in pharmazeutischen Produkten fordert deshalb die Monografie 07/2003:1444 "Macrogole" in der Europäischen Pharmakopoe (Ph. Eur.) 4.5 (gültig seit Juli 2003) einen maximalen Aldehydgehalt, bestimmt als Formaldehyd in stark saurer Lösung, von maximal 30 ppm, in besonderen Anwendungen von maximal 15 ppm.

Marktübliches Polyethylenglykol zeigt jedoch häufig einen Aldehydgehalt (bestimmt als Formaldehyd nach Ph. Eur. Monografie 07/2003:1444 "Macrogole") der deutlich höher liegt, typischerweise bei 40 bis 100 ppm. Dieser Gehalt an Aldehyd ist bedingt durch den Herstellprozess für Polyethylenglykol. Üblicherweise geht man so vor, dass man durch Reaktion von Wasser und Ethylenoxid zunächst eine Mischung herstellt, die im wesentlichen aus Mono-, Di-, Triethylenglykol und höheren Glykolen besteht (Glykolmischung). Diese Glykolmischung wird destillativ getrennt. Bei diesem Prozess erfolgen Abbaureaktionen durch die hohe Temperaturbelastung im Verlauf der destillativen Trennung der Glykolmischung. Das so gewonnene Mono-, Di- oder Triethylenglykol dient dann als Ausgangsprodukt zur Herstellung des eigentlichen Polyethylenglykols, indem an diese Glykole in an sich bekannter Weise Ethylenoxid unter basischer Katalyse additiert wird.

Auch der vor der Ethoxylierung zu Polyethylenglykol häufig durchgeführte Trocknungsschritt bei hohen Temperaturen von bis zu 150°C, wie er in EP 1 245 608 beschrieben ist, fördert weiterhin die Bildung von Aldehyden. Diese Aldehyde finden sich anschließend in den durch Ethoxylierung der Ausgangsglykole hergestellten Polyethylenglykolen wieder.

Auch nach EP 1 245 608 durch Ethoxylierung von Triethylenglykol hergestelltes Polyethylenglykol mit einer niedrigen mittleren Molmasse von 190 bis 1050 zeigt einen Aldehydgehalt (bestimmt als Formaldehyd nach Ph. Eur. Monografie 07/2003:1444 "Macrogole") der typischerweise bei 40 bis 100 ppm liegt. Dies liegt vermutlich daran, dass auch dort ein Triethylenglykol zum Einsatz kommt, das unter hoher Temperaturbelastung aus der Glykolmischung gewonnen wurde, wie oben beschrieben.

Ein Aldehydgehalt oberhalb der gewünschten Grenze von maximal 15 beziehungsweise 30 ppm (gemessen als Formaldehyd) ist in vielen Anwendungen nicht akzeptabel. Besonders in Anwendungen, die den lebenden Menschen mit einbeziehen, wie etwa kosmetische und pharmazeutische Anwendungen, muss der Aldehydgehalt so niedrig wie möglich liegen. Es stellte sich daher die Aufgabe, Polyethylenglykole mit einem niedrigen Aldehydgehalt und ein Verfahren zu deren Herstellung bereitzustellen.

Überraschend wurde nun gefunden, dass Polyethylenglykol mit niedrigem Aldehydgehalt aus Triethylenglykol herstellbar ist, wenn man dieses Glykol unter wesentlich schonenderen Bedingungen aus dem Glykolgemisch gewinnt.

Gegenstand der Erfindung ist ein Verfahren zur Herstellung von Polyethylenglykol mit einem Restgehalt von weniger als 30 ppm Aldehyd, bestimmt als Formaldehyd nach Ph. Eur. Monographie 07/2003: 1444 "Macrogole", durch Ethoxylierung von Triethylenglykol in Gegenwart eines basischen Katalysators, dadurch gekennzeichnet, dass man ein Triethylenglykol einsetzt, das durch Destillation aus einer Glykolmischung, bestehend im wesentlichen aus Mono-, Di-, Triethylenglykol und höheren Glykolen, bei einem Druck von 5 bis 10 hPa und einer Temperatur von 140 bis 160°C gewonnen wird. Vorzugsweise enthält das Polyethylenglykol weniger als 15 ppm Aldehyd bestimmt als Formaldehyd nach der genannten Methode. Das Polyethylenglykol hat vorzugsweise eine mittlere Molmasse von 190 bis 40.000, besonders bevorzugt von 190 bis 1050 und insbesondere von 190 bis 210.

Die Herstellung des erfindungsgemäßen Polyethylenglykols erfolgt im Prinzip auf die oben beschriebene Weise, die an sich bekannt ist, nämlich Herstellung einer Glykolmischung im wesentlichen bestehend aus Mono-, Di-, Triethylenglykol und höheren Glykolen, durch Reaktion von Wasser und Ethylenoxid, destillative Trennung dieser Glykolmischung in die drei genannten Glykole und Addition von Ethylenoxid unter basischer Katalyse an das aufgetrennte Triethylenglykol. Erfindungswesentlich sind hierbei die physikalischen Parameter für die destillative Aufarbeitung der Glykolmischung. So wird das Triethylenglykol durch Destillation bei 5 bis 10 hPa und 140 bis 160°C, bevorzugt bei 5 hPa und 140°C aus einer Glykolmischung gewonnen. Durch diese schonende Herstellung enthält das Ausgangsglykol einen sehr niedrigen Aldehydgehalt, wodurch das daraus durch anschließende Ethoxylierung resultierende Polyethylenglykol ebenfalls einen niedrigen Aldehydgehalt aufweist.
Eine zusätzliche Möglichkeit zur Verminderung des Aldehydgehalts besteht darin, dass als basischer Katalysator bei der Addition von Ethylenoxid an das Triethylenglykol trockenes Alkali- oder Erdalkalimetallhydroxid, bevorzugt trockenes Natriumhydroxid, verwendet wird. Dadurch kann auf die in EP 1 245 608 beschriebene Trocknung verzichtet werden, um thermische Belastung des Glykols und damit einhergehende Aldehydbildung während des Trocknungsschritts zu vermeiden. Dadurch weist auch das daraus resultierende Polyethylenglykol den gewünschten niedrigen Aldehydgehalt auf. Prinzipiell ist es jedoch nicht ausgeschlossen, die in EP 1 245 608 beschriebene Trocknung der Ausgangsglykole durch Erhitzen mit dem erfindungsgemäßen Verfahren zu kombinieren.

Die Addition des Ethylenoxids an das Triethylenglykol erfolgt in an sich bekannter Weise, beispielsweise bei 80 bis 230°C, vorzugsweise 120 bis 180°C und einem Druck von 0 bis 1 MPa, vorzugsweise 0,2 bis 0,6 MPa in Gegenwart einer stark alkalischen Substanz wie Na- oder KOH entsprechend den Angaben in EP 1 245 608.

Weiterer Gegenstand der Erfindung ist ein Produkt erhältlich durch das erfindungsgemäße Verfahren.

Weiterer Gegenstand der Erfindung ist auch die Verwendung eines derartigen Produkts als Hilfsmittel oder Wirkstoff in kosmetischen und pharmazeutischen Zubereitungen.

Die nachfolgenden Beispiele dienen der näheren Erläuterung der Erfindung ohne sie jedoch darauf einzuschränken. Alle Prozentangaben sind Gewichtsprozente.

### Beispiel 1: Herstellung von Polyethylenglykol mit mittlerer Molmasse von 200:

7491 kg Triethylenglykol, das durch schonende Destillation bei 5 hPa und 140°C aus einer Glykolmischung, bestehend im wesentlichen aus Mono-, Di-, Triethylenglykol und höheren Glykolen, gewonnen wurde, wurden mit 5 kg 50 %iger, wässriger Natriumhydroxidlösung als Katalysator versetzt und für 1 Stunde bei 110°C und Vakuum getrocknet. Dann wurden 2498 kg Ethylenoxid gasförmig in Stickstoffatmosphäre zugegeben und die Reaktion durch Neutralisation des Katalysators mit 6 kg 90 %iger Milchsäure beendet.
Der Aldehydgehalt, bestimmt als Formaldehyd nach Ph. Eur. Monografie 07/2003:1444 "Macrogole", lag bei 13 ppm.

### Beispiel 2: Herstellung von Polyethylenglykol mit mittlerer Molmasse von 200:

7491 kg Triethylenglykol, das durch schonende Destillation bei 5 hPa und 140°C aus einer Glykolmischung, bestehend im wesentlichen aus Mono-, Di-, Triethylenglykol und höheren Glykolen, gewonnen wurde und danach einen Wassergehalt von 0,04 % aufwies, wurden mit 2,5 kg Natriumhydroxidpellets als Katalysator versetzt. Dann wurden 2498 kg Ethylenoxid gasförmig in Stickstoffatmosphäre zugegeben und die Reaktion durch Neutralisation des Katalysators mit 6 kg 90 %iger Milchsäure beendet.
Der Aldehydgehalt, bestimmt als Formaldehyd nach Ph. Eur. Monografie 07/2003:1444 "Macrogole", lag bei 13 ppm.

## Patentansprüche

1. Verfahren zur Herstellung von Polyethylenglykol mit einem Restgehalt von weniger als 30 ppm Aldehyd, bestimmt als Formaldehyd nach Ph. Eur. Monografie 07/2003: 1444 "Macrogole", durch Ethoxylierung von Triethylenglykol in Gegenwart eines basischen Katalysators, **dadurch gekennzeichnet, dass** man ein Triethylenglykol einsetzt, das durch Destillation aus einer Glykolmischung, bestehend im wesentlichen aus Mono-, Di-, Triethylenglykol und höheren Glykolen, bei einem Druck von 5 bis 10 hPa und einer Temperatur von 140 bis 160°C gewonnen wird.

2. Verfahren nach Anspruch 1, **dadurch gekennzeichnet, dass** das Polyethylenglykol einen Restgehalt von weniger als 15 ppm Aldehyd aufweist.

3. Verfahren nach Anspruch 1 oder 2, **dadurch gekennzeichnet, dass** das Polyethylenglykol eine mittlere Molmasse von 190 bis 40.000 aufweist.

4. Verfahren nach Anspruch 1 oder 2, **dadurch gekennzeichnet, dass** das Polyethylenglykol eine mittlere Molmasse von 190 bis 210 aufweist.

5. Verfahren zur Herstellung von Polyethylenglykol gemäß einem oder mehreren der Ansprüche 1 bis 4, durch Ethoxylierung von Triethylenglykol in Gegenwart eines basischen Katalysators, **dadurch gekennzeichnet, dass** man ein Triethylenglykol einsetzt, das durch Destillation aus einer Glykolmischung, bestehend im wesentlichen aus Mono-, Di-, Triethylenglykol und höheren Glykolen, bei einem Druck von 5 hPa und einer Temperatur von 140°C gewonnen wird.

6. Verfahren nach einem der Ansprüche 1 bis 5 **dadurch gekennzeichnet, dass** man als basischen Katalysator ein trockenes Alkali- oder Erdalkalimetallhydroxid einsetzt.

7. Verfahren nach einem der Ansprüche 1 bis 6 **dadurch gekennzeichnet, dass** man als basischen Katalysator trockenes Natriumhydroxid einsetzt.

8. Produkt erhältlich durch ein Verfahren nach einem oder mehreren der Ansprüche 1 bis 7.

9. Verwendung des Produkts nach Anspruch 8 als Hilfsmittel oder Wirkstoff in kosmetischen und pharmazeutischen Zubereitungen.

## Claims

1. A process for preparing polyethylene glycol with a residual content of less than 30 ppm aldehyde, determined as formaldehyde as specified in Ph. Eur. "macrogols" monograph 07/2003:1444, by ethoxylation of triethylene glycol in the presence of a basic catalyst, which comprises a triethylene glycol which is obtained by distillation from a glycol mixture consisting substantially of mono-, di-, triethylene glycol and higher glycols, at a pressure of from 5 to 10 hPa and a temperature of from 140 to 160°C, being employed.

2. The process as claimed in claim 1, wherein the polyethylene glycol has a residual content of less than 15 ppm aldehyde.

3. The process as claimed in claim 1 or 2, wherein the polyethylene glycol has an average molar mass of from 190 to 40 000.

4. The process as claimed in claim 1 or 2, wherein the polyethylene glycol has an average molar mass of from 190 to 210.

5. The process for preparing polyethylene glycol as claimed in one or more of claims 1 to 4, by ethoxylation of triethylene glycol in the presence of a basic catalyst, wherein a triethylene glycol which is obtained by distillation from a glycol mixture consisting substantially of mono-, di-, triethylene glycol and higher glycols, at a pressure of 5 hPa and a temperature of 140°C, is employed.

6. The process as claimed in any of claims 1 to 5, wherein a dried alkali metal hydroxide or alkaline earth metal hydroxide is employed as basic catalyst.

7. The process as claimed in any of claims 1 to 6, wherein dried sodium hydroxide is employed as basic catalyst.

8. A product obtainable by a process as claimed in one or more of claims 1 to 7.

9. The use of the product as claimed in claim 8 as auxiliary or active ingredient in cosmetic and pharmaceutical preparations.

## Revendications

1. Procédé de préparation de polyéthylèneglycol présentant une teneur résiduelle en aldéhyde de moins de 30 ppm, exprimée en formaldéhyde selon la monographie de la Pharmacopée Européenne 07/2003 : 1444 "Macrogols", par éthoxylation de triéthylèneglycol en présence d'un catalyseur basique, **caractérisé en ce que** l'on met en oeuvre un triéthylèneglycol qui est obtenu par distillation à partir d'un mélange de glycols essentiellement composé de mono-, di-, tri-éthylèneglycol et de glycols supérieurs, sous une pression de 5 à 10 hPa et à une température de 140°C à 160°C.

2. Procédé selon la revendication 1, **caractérisé en ce que** le polyéthylèneglycol présente une teneur résiduelle en aldéhyde de moins de 15 ppm.

3. Procédé selon la revendication 1 ou 2, **caractérisé en ce que** le polyéthylèneglycol présente une masse moléculaire moyenne de 190 à 40 000.

4. Procédé selon la revendication 1 ou 2, **caractérisé en ce que** le polyéthylèneglycol présente une masse moléculaire moyenne de 190 à 210.

5. Procédé de préparation de polyéthylèneglycol selon l'une quelconque ou plusieurs des revendications 1 à 4, par éthoxylation de triéthylèneglycol en présence d'un catalyseur basique, **caractérisé en ce que** l'on met en oeuvre un triéthylèneglycol qui est obtenu par distillation à partir d'un mélange de glycols essentiellement composé de mono-, di-, tri-éthylèneglycol et de glycols supérieurs, sous une pression de 5 hPa et à une température de 140°C.

6. Procédé selon l'une quelconque des revendications 1 à 5, **caractérisé en ce que** l'on met en oeuvre, en tant que catalyseur basique, un hydroxyde de métal alcalin ou de métal alcalino-terreux anhydre.

7. Procédé selon l'une quelconque des revendications 1 à 6, **caractérisé en ce que** l'on met en oeuvre, en tant que catalyseur basique, de l'hydroxyde de sodium anhydre.

8. Produit pouvant être obtenu au moyen d'un procédé selon l'une quelconque ou plusieurs des revendications 1 à 7.

9. Utilisation du produit selon la revendication 8 en tant qu'adjuvant ou principe actif dans des préparations cosmétiques et pharmaceutiques.
